**Europäisches Patentamt**

(19) **European Patent Office**

**Office européen des brevets**

(11) Veröffentlichungsnummer: **0 051 254**
**B1**

(12) **EUROPÄISCHE PATENTSCHRIFT**

(45) Veröffentlichungstag der Patentschrift:
**22.08.84**

(51) Int. Cl.³: **A 41 D 13/00, B 62 J 27/00**

(21) Anmeldenummer: **81109024.0**

(22) Anmeldetag: **27.10.81**

(54) Motorradbekleidung.

(30) Priorität: **27.10.80 DE 3040421**
**27.08.81 DE 3133948**

(43) Veröffentlichungstag der Anmeldung:
**12.05.82 Patentblatt 82/19**

(45) Bekanntmachung des Hinweises auf die Patenterteilung:
**22.08.84 Patentblatt 84/34**

(84) Benannte Vertragsstaaten:
**AT BE CH FR GB IT LI NL SE**

(73) Patentinhaber: **Kroiss, Alfred, Lindenstrasse 4,
D-8059 Wartenberg (DE)**
Patentinhaber: **Methfessel, Heinz, Eichenstrasse 31,
D-8059 Wartenberg (DE)**

(72) Erfinder: **Kroiss, Alfred, Lindenstrasse 4,
D-8059 Wartenberg (DE)**
Erfinder: **Methfessel, Heinz, Eichenstrasse 31,
D-8059 Wartenberg (DE)**

(74) Vertreter: **Lorenz, Eduard et al, Widenmayerstrasse 23,
D-8000 München 22 (DE)**

(56) Entgegenhaltungen:
**EP - A - 0 043 990
DE - A - 2 220 740
DE - A - 2 626 765
DE - A - 2 717 712
FR - A - 2 396 521
GB - A - 1 479 733
GB - A - 1 588 919
US - A - 4 059 852**

ACTORUM AG

## Beschreibung

Die Erfindung betrifft eine Motorradbekleidung nach dem Oberbegriff des Patentanspruchs 1.

Bei einer aus der GB-PS Nr. 1479733 bekannten Motorradbekleidung dieser Art erfolgt eine Zündung der Treibstoffladungen durch die elektrische Zündeinrichtung dann, wenn durch Fühleinrichtungen ein Sturz gemeldet wird.

Ein besonderes Problem beim Aufblasen der stossabsorbierenden Kammern einer Motorradbekleidung durch mit Treibstoffladungen versehene Gasgeneratoren besteht darin, dass die Kammern bis zum Aufprall des Motorradfahrers nach einem Sturz aufgeblasen sein müssen und dass das Gas den Kammern nur in einer solchen Menge zugeführt werden darf, dass die Leitungen und die mit diesen verbundenen Teile nicht beschädigt werden. Weiterhin soll die Zündung der Treibstoffladungen in dem frühest möglichen Zeitpunkt erfolgen, damit ausreichend Zeit zum Aufblasen der stossabsorbierenden Kammern zur Verfügung steht, also nicht erst, wenn ein Sturz erfolgt ist, sondern bereits bei Einleitung des Sturzes. Bei der bekannten Vorrichtung erfolgt die Zündung der Treibstoffladungen erst dann, wenn Beschleunigungsmesser einen Sturz anzeigen, was üblicherweise jedoch erst so spät erfolgt, dass keine ausreichende Zeit zum Aufblasen der stossabsorbierenden Kammern mehr zur Verfügung steht.

Aufgabe der Erfindung ist es daher, eine Motorradbekleidung nach dem Oberbegriff des Patentanspruchs 1 zu schaffen, deren stossabsorbierenden Kammern so rechtzeitig vor einem Sturz mit Gas aufgeblasen werden können, dass ein ausreichender Schutz gewährleistet ist, ohne dass eine Beschädigung der Kammern und der Leitungen durch einen zu plötzlichen und grossen Druckgasanfall zu befürchten ist.

Erfindungsgemäss wird diese Aufgabe durch die in dem kennzeichnenden Teil des Patentanspruchs 1 angegebenen Merkmale gelöst.

Bei der erfindungsgemässen Motorradbekleidung erfolgt eine Zündung der Treibstoffladungen zum frühest möglichen Zeitpunkt, nämlich dann, wenn sich der Motorradfahrer über eine einen Sturz anzeigende Strecke von dem Motorrad abhebt. Während der kurzen, zum Aufblasen der stossabsorbierenden Kammern zur Verfügung stehenden Zeit wird eine ausreichende Druckgasmenge in einer dosierten Form zugeführt, weil die Treibstoffladungen mit zeitlicher Verzögerung der Reihe nach gezündet werden, so dass ein ausreichend grosser Druckgasstrom über eine längere Zeit zur Verfügung steht und von dem Zuleitungssystem verkraftet werden kann.

Vorteilhafte Ausgestaltungen der Erfindung sind in den Unteransprüchen beschrieben worden.

Ausführungsbeispiele der Erfindung werden nachstehend anhand der Zeichnung näher erläutert. In dieser zeigt:

Fig. 1 eine schematische Vorderansicht eines einteiligen Motorrad-Sicherheitsanzugs,

Fig. 2 eine Rückansicht des Sicherheitsanzugs nach Fig. 1,

Fig. 3 eine Vorderansicht einer weiteren Ausführungsform eines Motorradanzugs,

Fig. 4 eine Rückansicht des Motorradanzugs nach Fig. 3,

Fig. 5 eine schematische Darstellung der mit dem Sicherheitsanzug verbundenen Gasgeneratoren einschliesslich der zugehörigen Steuer- und Betätigungseinrichtungen,

Fig. 6 einen Schnitt durch die Schnellverschlusskupplung,

Fig. 7 eine schematische Darstellung der in das Vorkammergehäuse eingeschraubten, das Druckgas erzeugenden Patronen, und

Fig. 8 eine schematische Darstellung der die Gasgeneratoren betätigenden Schalteinrichtung im Schnitt.

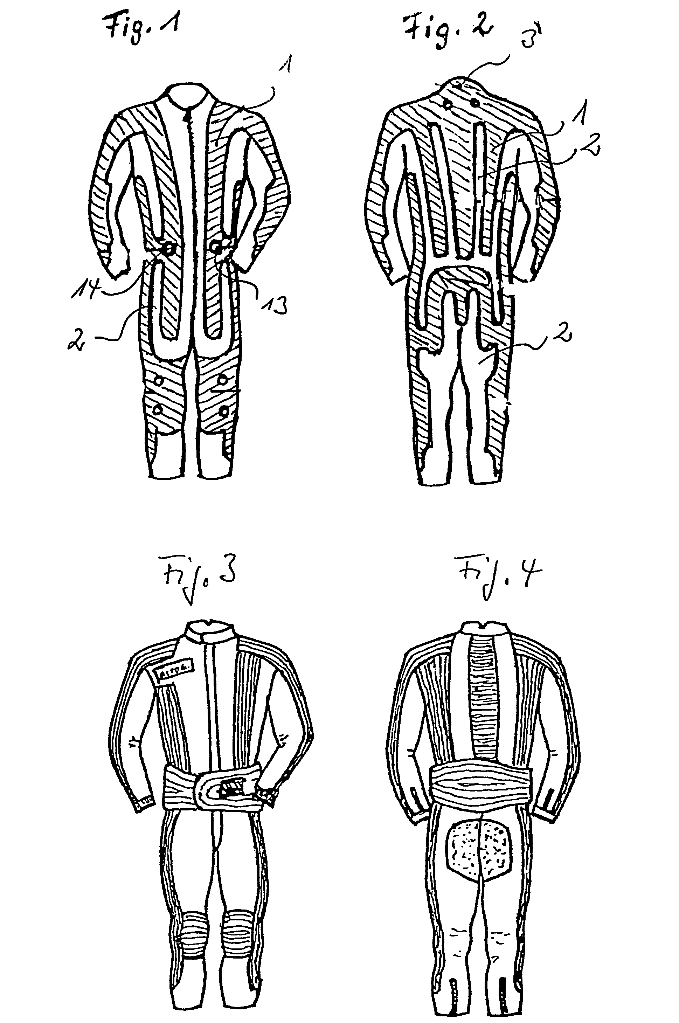

Wie aus den Fig. 1 bis 4 ersichtlich ist, kann der Motorrad-Sicherheitsanzug einteilig hergestellt werden. Er weist stossabsorbierende Kammern 1 auf, die im wesentlichen in Längsrichtung verlaufen und untereinander in Verbindung stehen. Die Bereiche 2 zwischen den Kammern bestehen zweckmässigerweise aus einem streckbaren Material, das einerseits eine ausreichende Dehnung gewährleistet und andererseits atmungsaktiv ist. Die Luftdurchlässigkeit kann zusätzlich noch durch Durchbrüche erhöht werden.

Bei zweiteilig ausgebildeten Sicherheitsanzügen, bestehend aus Jacke und Hose mit Reissverschlussverbindung, ist ein Anschlussstück der Jacke und ein anderes Anschlussstück der Hose zugeordnet.

Die beim Sturz besonders gefährdeten Körperteile, wie Schulter, Schlüsselbein, Ellenbogen, Wirbelsäule, Oberschenkel und Knie, sind durch grösser ausgebildete Luftkammern geschützt.

Um bei Stürzen aus hoher Geschwindigkeit den fliegenden Körper vor peitschenartigen Verwindungen zu schützen, die oft bereits tödliche Verletzungen durch Rückgratbruch zur Folge haben, können zur Stabilisierung des Körpers zwei diagonal verlaufende Luftkammern eingearbeitet sein, die vorne links und rechts am Becken beginnend über die Schultern bis zum Gesäss reichen.

Alle Schwellkörper-Kammersysteme sind dadurch atmungsaktiv, das zwischen den Kammerverschweissungen Luftdurchlässe vorgesehen sind. Die Luftdurchlässe können einen Querschnitt von etwa 1 cm haben. Die Kammern bestehen aus einem Material, das Drücken standzuhalten vermag, die zu deren stabilisierenden Aufblasen erforderlich sind.

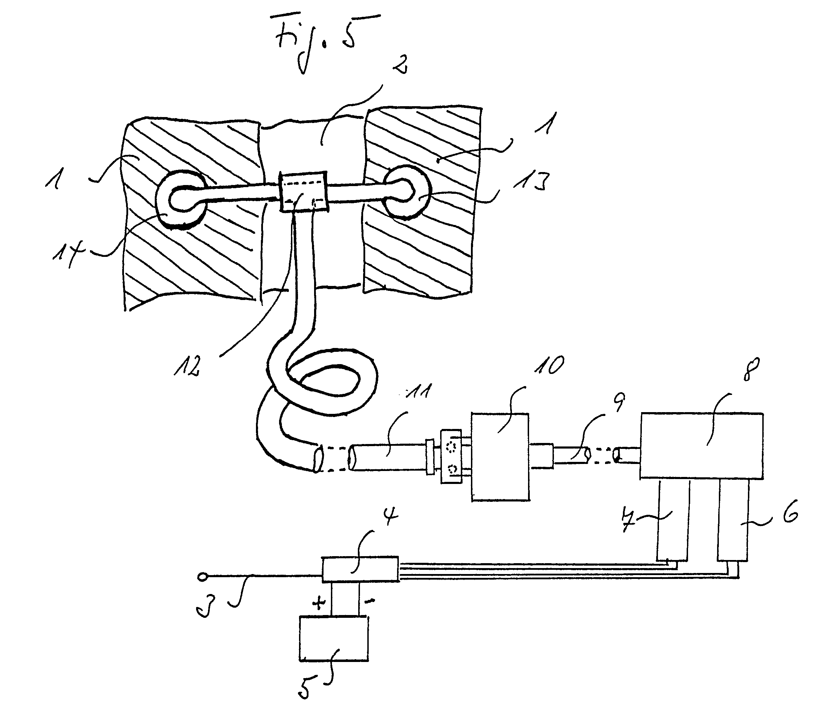

Wie aus Fig. 2 ersichtlich ist, kann der Sicherheitsanzug mit einem Nackenschutz 3' versehen sein, der sich zwischen dem Helm und dem Nacken des Motorradfahrers befindet. Damit ist auch diese besonders gefährdete Stelle des Körpers des Motorradfahrers im Falle eines Sturzes geschützt.

Der in den Fig. 1 und 2 dargestellte Sicherheitsanzug besteht aus einem Unterdress, der unter einem üblichen Motorradanzug getragen werden kann.

Der Motorradanzug besteht neben den Schwellkörperkammern aus druckfestem Material aus elastischem Material, beispielsweise Baumwolle, das hautfreundlich ist und gut Schweiss aufnimmt. Der Anzug kann so ausgestaltet werden, dass er in einer Waschmaschine waschbar ist.

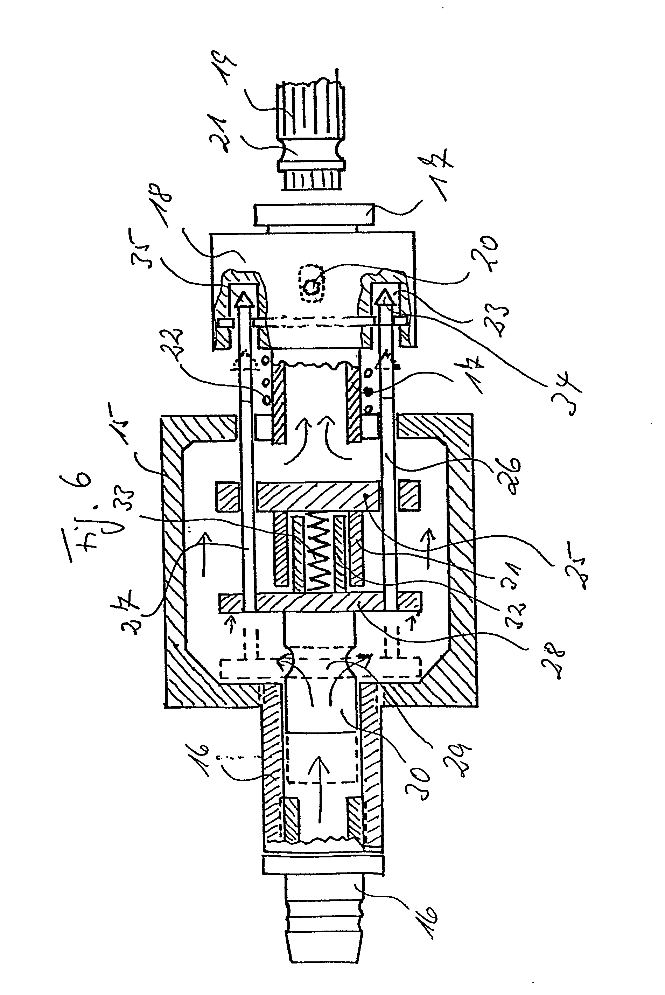

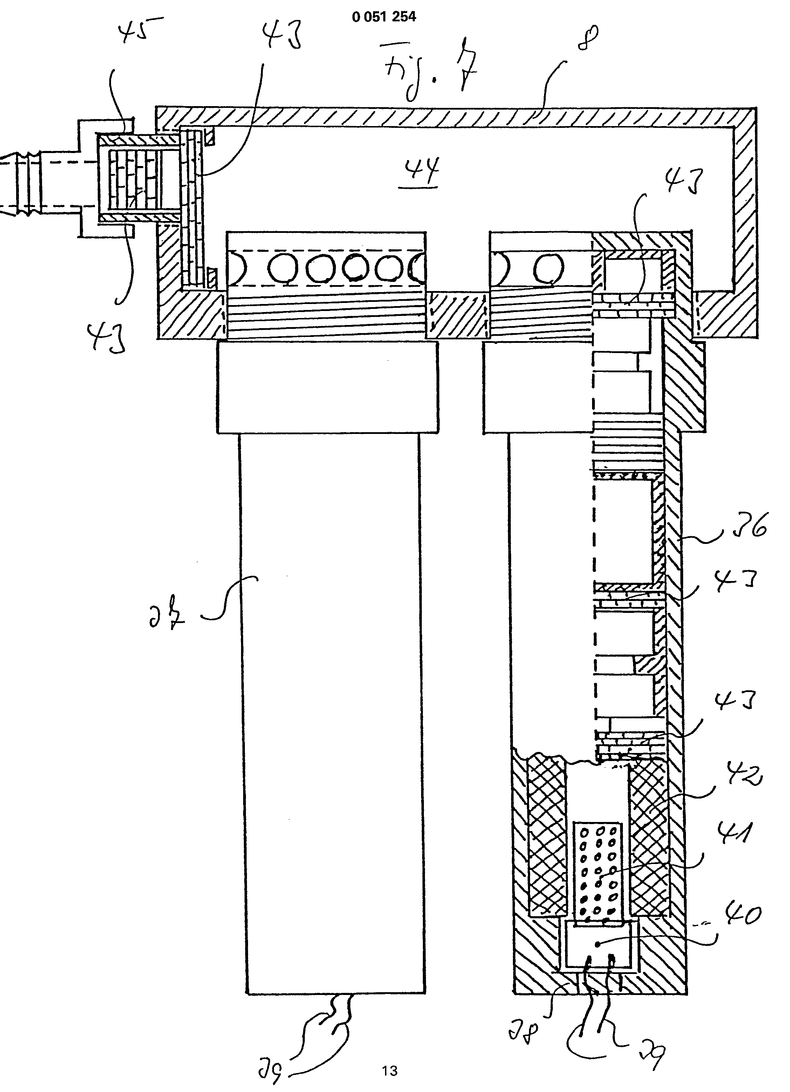

Der in den Fig. 3 und 4 dargestellte Motorradanzug ist als Oberbekleidung ausgebildet.

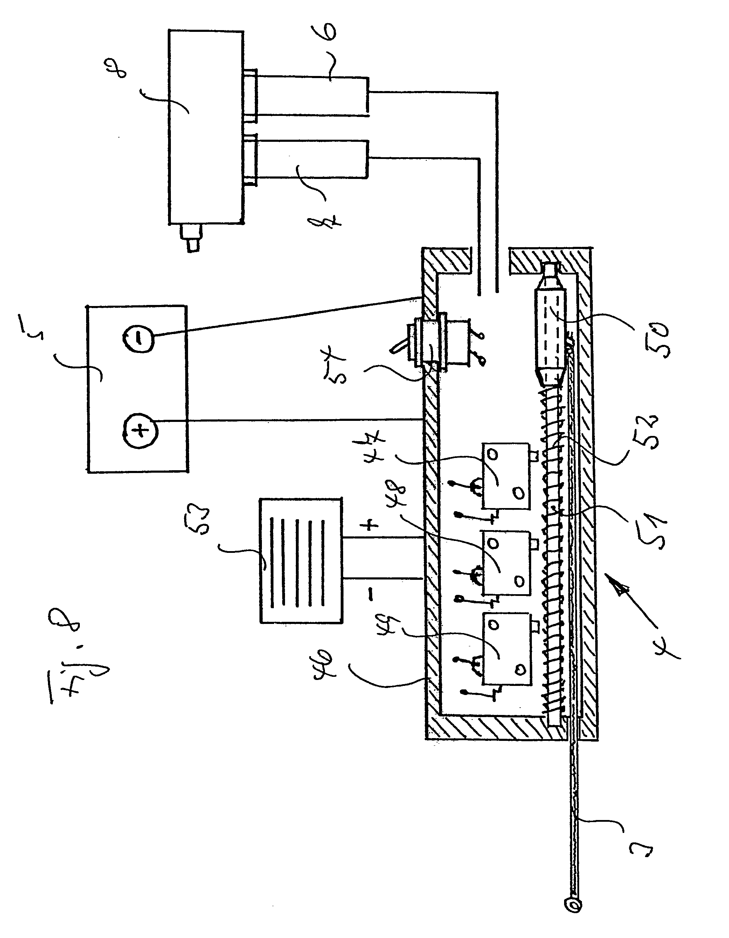

Ein Sicherheitssystem mit Gasgeneratoren wird nachstehend anhand der Fig. 5 bis 8 näher erläutert:

Der Aufbau des Systems ist schematisch aus Fig. 5 ersichtlich.

Der den Sicherheitsanzug tragende Motorradfahrer ist über die Reissleine 3 mit der Auslöseeinrichtung 4 verbunden, die Schalter enthält, denen über die Motorradbatterie 5 Strom zugeführt wird. Über elektrische Kabel ist die Auslöseeinrichtung mit den Gasgeneratorpatronen 6, 7 verbunden, die in das Gehäuse 8 der Vorkammer eingeschraubt sind. Die Vorkammer 8 ist über eine Leitung 9 mit der Schnellverschlusskupplung 10 verbunden. Mit der Schnellverschlusskupplung 10 ist die zu dem Sicherheitsanzug führende Leitung 11 automatisch lösbar verbunden. Die Leitung 11 ist über ein T-förmiges Verteilerstück 12 mit den in die Luftkammern 1 mündenden Anschlussstücken 13, 14 verbunden.

Eine Ausführungsform der Schnellverschlusskupplung ist schematisch in Fig. 6 dargestellt. Die Schnellverschlusskupplung besteht aus einem eine Kammer umschliessenden Gehäuse 15, das mit einem Anschlussstutzen 16 zum Anschluss des von dem Gasgenerator kommenden Schlauches 9 versehen ist. Auf ihrer Ausgangsseite weist die Kammer 15 einen Anschlussstutzen 17 auf, auf dem eine Schiebehülse 18 begrenzt axial verschieblich geführt ist. In den Stutzen 17 ist der mit der Leitung 11 verbundene Kupplungsstecker 19 einführbar. In auf einer Umfangslinie des Stutzens 17 befindlichen Bohrungen sind Kugeln 20 gehaltert, die durch Überschieben der Hülse 18 in die Ringnut 21 des Kupplungssteckers 19 geschoben und in dieser die Verbindung blockierend gehalten werden. Die Schiebehülse 18 wird durch eine Druckfeder 22 in ihrer vorderen arretierenden Stellung gehalten. Zum Lösen der Verbindung von Hand ist es lediglich erforderlich, die Schiebehülse 18 in Richtung auf das Gehäuse 15 zu bewegen, so dass die Kugeln 20 in Ringnuten der Schiebehülse 18 ausweichen können und die blockierende Verbindung freigegeben wird.

Um eine selbsttätige Lösung der Schnellverschlusskupplung nach dem Aufblasen der Kammern mit Druckgas zu gewährleisten, ist in einer Ringnut 23 der Schiebehülse 18 eine ringförmige Scheibe 24 befestigt, die mit Löchern versehen ist. In dem Gehäuse 15 sind auf einem mit Bohrungen versehenen Steg 25 zwei Stangen 26, 27 längsverschieblich geführt, deren Enden durch eine ein Joch bildende Platte 28 miteinander verbunden sind. Die Stangen 26, 27 durchsetzen das Gehäuse 15 in Bohrungen und enden ausserhalb des Gehäuses. Die Jochplatte 28 ist mit einem mit einer Querbohrung 29 versehenen Rohrstück 30 versehen, das in den Stutzen 16 längsverschieblich geführt ist. Auf der Rückseite der Jochplatte 28 und auf dem Steg 25 sind teleskopartig ineinandergreifende Rohrstücke 31, 32 befestigt, die eine Druckfeder 33 einschliessen, die sich einerseits auf dem Steg 25 und andererseits auf der Jochplatte 28 abstützt.

Die Stangen 26, 27 weisen an ihren vorderen Enden widerhakenähnliche Spitzen 34, 35 auf, mit denen sie Bohrungen in der Scheibe 24 in Einschubrichtung in der Weise durchdringen können, dass sie bei ihrem Rückzug arretiert sind.

In der Verriegelungsstellung des Anschlusssteckers 19 befindet sich die Schiebehülse 18 in ihrer dargestellten vorgeschobenen Stellung. In dieser Stellung nehmen die Jochplatte 28 und die Spitzen 34, 35 der Stangen 26, 27 die gestrichelte Stellung ein. Wird nun durch die Schnellverschlusskupplung Druckgas geblasen, wird die Jochplatte 28 in die vollausgezogene Stellung gegen die Kraft der Feder 33 geschoben, in der die Spitzen 34, 35 die Bohrungen in der Scheibe 28 durchdringen. Lässt der explosionsartig aufgebrachte Druck nach, schiebt die Druckfeder 33 die Jochplatte 28 in ihre gestrichelte Ausgangslage zurück. Da die Druckfeder 33 stärker ist als die Druckfeder 22 der Verschiebehülse 18, nehmen die Spitzen 34, 35 aufgrund ihrer Widerhakenteile die Verschiebehülse 18 mit und geben den Kupplungsstecker 19 frei. Die Bohrungen in der ringförmigen Scheibe 24 können durch gegen Federkraft verschiebliche Teile verschliessbar sein, die zur Lösung und Freigabe der Spitzen 34, 35 verschwenkbar ausgebildet sind.

Die Verschiebehülse 18 kann auch in der Weise mit dem Kupplungsstecker 19 verbunden sein, dass sie durch den auf die Leitung 11 wirkenden Zug in ihre Öffnungsstellung bewegt wird.

Wie aus Fig. 7 ersichtlich ist, sind in das Gehäuse 8 der Zwischenkammer zwei Gasgeneratorpatronen 36, 37 eingeschraubt. Die Gasgeneratorpatronen sind hülsenförmig ausgebildet, wobei durch die Bodenplatte 28 elektrische Leitungen 39 zu dem elektrischen Zünder 40 geführt sind. Oberhalb des elektrischen Zünders 40 ist die Anzündmischung 41 angeordnet. Diese ist zylindrisch von der Treibmischung 42 eingefasst. Die Anzündmischung ist bekannter Art und kann beispielsweise unter der Bezeichnung ACM-7 von der Firma Bayernchemie in Ottobrunn bezogen werden. Auch die Treibmischung ist bekannter Art und der Treibstoff kann unter der Bezeichnung GGP 401 von der Firma Bayernchemie erhalten werden. Die Treibmischung ist ein explosionsartig verbrennender, Verbrennungsgas abgebender Stoff.

Oberhalb der Treibmischung 42 sind in den Gasgeneratoren 36, 37 mehrere Sätze 43 aus Metallgitter angeordnet, die das erzeugte Druckgas abkühlen und filtern. Aus der Vorkammer 44 gelangt das Druckgas über den Stutzen 45 in den zu der Schnellverschlusskupplung 10 führenden Schlauch 9.

In dem Gehäuse 46 der Auslöseeinrichtung 4 sind hintereinander in Reihe drei Mikroschalter 47, 48, 49 angeordnet, deren Schaltstössel von einem Schaltnocken 50 betätigt werden, der axial verschieblich auf einer parallel zu den Schaltern angeordneten Achse 51 geführt ist. Auf die Achse 51 ist eine Druckfeder 52 aufgeschoben, die sich einerseits auf der Gehäusewandung und andererseits auf dem Schaltnocken 50 abstützt. Durch die Druckfeder 52 ist der Schaltnocken 50 in seiner inaktiven Stellung gehalten. Mit dem Schaltnocken 50 ist die Reissleine 3 verbunden, bei deren Betätigung der Schaltnocken 50 über die Stössel der Schalter 47, 48 hinwegfährt und diese der Reihe nach betätigt. Der erste Schalter 47 betätigt den Summer 53, während die nachgeschalteten Schalter 48, 49 der Reihe nach die Gasgeneratoren 6,7 zünden. Dabei reicht die zwischen der Betätigung der Schaltnocken der Schalter 48, 49 liegende Zeit aus, um die Gasgeneratoren mit der gewünschten Zeitverzögerung nacheinander zu zünden.

Die Auslöseeinrichtung 4 ist mit einem Hauptschalter 54 versehen, der das Sicherheitssystem aktiviert. Von dem ordnungsgemässen Funktionieren kann sich der Fahrer durch Betätigung der Reissleine 3 und Verschieben des Schaltnockens 50 bis zu dem dem Summer 53 zugeordneten Mikroschalter 47 überzeugen.

## Patentansprüche

1. Motorradbekleidung mit selbsttätig aufblasbaren stossabsorbierenden Kammern und mit festen Treibstoffladungen versehenen Gasgeneratoren, die durch eine elektrische Zündeinrichtung im Falle eines Sturzes zündbar und durch eine mit einem Rückschlagventil versehene Leitung mit den Kammern verbunden sind, dadurch gekennzeichnet, dass die Bekleidung durch einen Anzug gebildet ist, der über eine Auslöseeinrichtung (3, 4) mit dem Motorrad verbindbar ist, die bei dessen Anheben über eine einen Sturz anzeigende Strecke eine Steuereinrichtung (47-51) betätigt, dass die Steuereinrichtung mindestens zwei Treibstoffladungen (42), die in in eine Vorkammer (44) mündenden hülsenförmigen Gehäusen enthalten sind, mit zeitliicher Verzögerung der Reihe nach zündet und dass die Vorkammer (44) über eine Kupplung (10) mit der zu dem Anzug führenden Leitung (11) verbunden ist, die mit einer Einrichtung versehen ist, die diese nach dem Aufblasen der Kammern löst.

2. Motorradbekleidung nach Anspruch 1, dadurch gekennzeichnet, dass die hülsenförmigen Gehäuse (36, 37) einen flüssigen Treibstoff enthalten.

3. Motorradbekleidung nach einem der beiden Ansprüche 1 oder 2, dadurch gekenzeichnet, dass in den hülsenförmigen Gehäusen (36, 37) und/oder der Leitung (11) das Druckgas kühlende Einrichtungen vorhanden sind.

4. Motorradbekleidung nach Anspruch 3, dadurch gekennzeichnet, dass die kühlenden Einrichtungen aus Drahtgittern oder -geflechten (43) bestehen.

5. Motorradbekleidung nach Anspruch 1, dadurch gekennzeichnet, dass der Treibstoff (42) eine Anzündmischung (41) umgibt.

6. Motorradbekleidung nach Anspruch 5, dadurch gekennzeichnet, dass die Anzündmischung (41) von einem elektrischen Zünder (40) gezündet wird.

7. Motorradbekleidung nach Anspruch 1, dadurch gekennzeichnet, dass eine die Zuführungsleitung (11) nach der Druckgasabgabe selbsttätig von der Vorkammer (44) lösende Kupplung (10) vorgesehen ist.

8. Motorradbekleidung nach Anspruch 7, dadurch gekennzeichnet, dass die Kupplung (10) eine federbelastete Schiebehülse (18) und einen Kupplungsstecker (19) aufweist und dass die Schiebehülse (18) zum Entkuppeln mit der abzureissenden Leitung (11) oder einem in Öffnungsrichtung durch eine Feder (33) belasteten Gleitstück (26, 27, 28) verbunden ist, das durch den Gasdruck beim Einblasen mit der Schiebehülse (18) in kuppelnden Eingriff gebracht wird.

9. Motorradbekleidung nach Anspruch 1, dadurch gekennzeichnet, dass die Steuereinrichtung aus einer elektronischen Logikschaltung oder einem Mikrocomputer besteht.

10. Motorradbekleidung nach Anspruch 1, dadurch gekennzeichnet, dass die Zündung der Treibstoffladungen (42) durch elektronische Steuerschaltungen erfolgt.

## Claims

1. Clothing for motorcyclists comprising automatically inflatable, shock-absorbing chambers and gas generators, which are provided with solid propellent charges and in case of a fall are adapted to be fired by an electric firing device and communicate with the chamber by a conduit provided with a check valve, characterized in that the clothing consists of a suit, which is adapted to be connected to the motorcycle by a triggering device (3, 4), which in response to the raising of the motorcycle over a fall-indicating distance actuates a control device (47-51), the control device fires in succession and with a time delay at least two propellent charges (42), which are contained in sleevelike housings, which open into an antechamber (44), and the antechamber (44) communicates through a coupling (10) with the conduit (11), which leads to the suit and is provided with means for detaching it when the chambers have been inflated.

2. Clothing for motorcyclists according to Claim 1, characterized in that the sleevelike housings (36, 37) contain liquid propellent.

3. Clothing for motorcyclists according to Claim 1 or 2, characterized in that means for cooling the compressed gas are provided in the sleevelike housings (36, 37) and/or the line (11).

4. Clothing for motorcyclists according to claim 3, characterized in that the cooling means consist of wire grids or wire mesh elements (43).

5. Clothing for motorcyclists according to Claim 1, characterized in that the propellent (42) surrounds a priming mixture (41).

6. Clothing for motorcyclists according to Claim 5, characterized in that the priming mixture (41) is fired by an electric detonator (40).

7. Clothing for motorcyclists according to Claim 1, characterized in that a coupling (10) is provided for automatically detaching the supply conduit (11) from the antechamber (44) after the discharge of compressed gas.

8. Clothing for motorcyclists according to Claim 7, characterized in that the coupling (10) comprises a spring-loaded slidable sleeve (18) and a coupling plug (19) and that the slidable sleeve (18) for uncoupling is connected to the conduit (11) to be torn off or to a slider (26, 27, 28), which is biased by a spring (33) in the opening sense and during the blowing in of gas is moved by the gas pressure to interengage with the slidable sleeve (18) so as to be coupled thereto.

9. Clothing for motorcyclists according to Claim 1, characterized in that the control device consists of an electronic logic circuit or a microcomputer.

10. Clothing for motorcyclists according to Claim 1, characterized in that the propellent charges (42) are fired by electronic control circuits.

**Revendications**

1. Vêtement de moto comportant des chambres automatiquement gonflables et résistantes aux chocs et des générateurs de gaz pourvus de charges de propulsion solides qui peuvent être allumés par un dispositif d'allumage électrique en cas de chute et qui sont reliés aux chambres par une conduite pourvue d'une soupape de retenue, caractérisé par le fait qu'il est une combinaison qui peut être raccordée moyennant un dispositif de déclenchement (3, 4) à la moto qui, lorsque celle-ci s'élève, actionne par l'intermédiaire d'une plage affichant une chute un dispositif de commande (47-51), que le dispositif de commande comprend au moins deux charges de propulsion (42) contenues dans des réservoirs en forme de douilles aboutissant dans une première chambre (44), douilles qui sont successivement allumées avec un certain retard et que la première chambre (44) est raccordée par un embrayage (10) avec la conduite de raccordement menant à la combinaison, ladite conduite étant pourvue d'un dispositif qui assure sa séparation après que les chambres sont gonflées.

2. Vêtement de moto selon la revendication 1, caractérisé par le fait que les boîtiers en forme de douilles (36, 37) contiennent un propulseur liquide.

3. Vêtement de moto selon l'une des revendications 1 ou 2, caractérisé par le fait que dans les boîtiers en forme de douilles (36, 37) et/ou la conduite (11) se trouvent des dispositifs de refroidissement du gaz sous pression.

4. Vêtement de moto selon la revendication 3, caractérisé par le fait que les dispositifs de refroidissement se composent de grillages ou treillis de fils de fer (43).

5. Vêtement de moto selon la revendication 1, caractérisé par le fait que l'agent de propulsion (42) entoure un mélange d'allumage (41).

6. Vêtement de moto selon la revendication 5, caractérisé par le fait que le mélange d'allumage (41) est allumé par un allumage électrique (40).

7. Vêtement de moto selon la revendication 1, caractérisé par le fait qu'un embrayage (10) est prévu pour détacher automatiquement la conduite d'alimentation (11) après l'acheminement du gaz sous pression de la première chambre (44).

8. Vêtement de moto selon la revendication 7, caractérisé par le fait que l'embrayage (10) est pourvu d'un manchon coulissant (18) chargé par un ressort et d'une fiche d'embrayage (19), et que le manchon coulissant (18) est relié pour le débrayage de la conduite à détacher (11) ou d'un dispositif d'ouverture avec une pièce coulissante (26, 27, 28) chargée par un ressort (33) qui est mis en prise d'embrayage par la pression du gaz lors du gonflage par le manchon coulissant (18).

9. Vêtement de moto selon la revendication 1, caractérisé par le fait que le dispositif de commande se compose d'un circuit électronique logique ou d'un microprocesseur.

10. Vêtement de moto selon la revendication 1, caractérisé par le fait que l'allumage des charges de propulsion (42) se fait par des circuits de commande électroniques.

Fig. 1

Fig. 2

Fig. 3

Fig. 4

Fig. 5

Fig. 6

0 051 254

Fig. 7

Fig. 8